# EUROPEAN PATENT SPECIFICATION

(11) **EP 2 904 421 B1**
(45) Date of publication and mention of the grant of the patent: **10.05.2023**
(21) Application number: 12775431.5
(22) Date of filing: 05.10.2012
(51) Int. Cl.: G01S 13/10, G01S 13/42, G01S 13/76, G01S 13/933, G01S 5/00, G08G 5/00, G08G 5/04

(54) **IMPROVED METHOD AND DEVICE FOR ESTIMATING A DISTANCE**
VERBESSERTES VERFAHREN UND VORRICHTUNG ZUR SCHÄTZUNG EINER DISTANZ
PROCÉDÉ AMÉLIORÉ ET DISPOSITIF PERMETTANT D'ESTIMER UNE DISTANCE

(43) Date of publication of application: 12.08.2015
(73) Proprietor: Flarm Technology AG, 6300 Zug (CH)
(72) Inventor: ROTHACHER, Urs, 8800 Thalwil (CH); MÄDER, Urban, CH-8047 Zürich (CH)
(74) Representative: Engelbrecht, Christoph
(86) International application number: PCT/CH2012/000233
(87) International publication number: WO 2014/053069

(56) References cited:
- EP-A1- 2 136 222
- WO-A1-2008/154747
- US-A1- 2005 024 256
- US-A1- 2006 009 909
- US-A1- 2008 166 973

## Description

### Technical Field

The present invention relates to a method for deriving a correction factor for improving the precision of a distance estimation. Furthermore, the present invention relates to a method and device for deriving such an improved distance estimation using such a correction factor for use in aviation.

### Introduction and Background Art

US 2006/0009909 A1 discloses systems and methods for determining bearing, EP 2136222 A1 discloses a validity check of vehicle position information, and WO 2008/154747 A1 discloses a mobile control node system and method for vehicles. US 2008/0166973 A1 shows a method for adjusting a radio-frequency coverage map, wherein received signal strength values are estimated at one or more locations.

State-of-the-art traffic-awareness collision-warning devices for aviation (such as FLARM, see, e.g., http://www.flarm.com/ as accessed on May 13, 2012) constantly monitor their own three-dimensional (3D) position, e.g., via GNSS (Global Navigation Satellite Systems), inertial navigation systems, or combined data. This 3D position information (called "second position information" herein) is then transmitted encoded in a digital radio signal. FLARM devices in other aircraft receive this radio signal, decode the associated 3D position information, display the other aircraft position, and compare this 3D position to their own 3D position (called "first position information" herein) from their own GNSS. A collision warning is then issued to the pilot as soon as an actual distance and/or a projected trajectory distance in the future between the two FLARM devices decreases below a distance threshold. Although proven highly reliable and very useful to prevent mid-air collisions, such collision-warning devices have the disadvantage to be blind to aircraft which are not equipped with FLARM systems.

As an improvement, collision-warning devices such as PowerFLARM (see, e.g., www.powerflarm.aero as accessed on May 13, 2012) furthermore monitor the signal intensities of "foreign", i.e., non-FLARM radio signals such as ADS-B or transponder signals that are, e.g., transmitted by many aircraft. A distance estimation is then derived from the intensity of these signals and a collision warning is issued to the pilot as soon as this estimated distance decreases below the distance threshold. However, such distance estimations that are solely based on radio signal intensities are rather coarse as they strongly depend on, e.g., receiver antenna mounting position and other factors.

### Disclosure of the Invention

Hence it is a general objective of the present invention to at least in part overcome these disadvantages.

These objectives are achieved by the device and methods of the independent claims.

Accordingly, a method for deriving a relative-position-dependent correction function for at least one first estimation of a distance (or equivalently "distance estimation") in aviation between a first position of at least one receiver (i.e., a receiver in one's own aircraft) and a second position of at least one transmitter (i.e., a transponder in a remote aircraft) comprises the following steps:
- Receiving by means of said receiver at least one radio signal which is transmitted by said transmitter.
- A signal intensity of the (advantageously pre-filtered) received radio signal is measured at the first position of the receiver (e.g., in the above example in one's own aircraft).
- Using this measured radio signal intensity, the first distance estimation between the first position (e.g., own aircraft position) and the second position (e.g., foreign aircraft position) is optionally derived, e.g., using an assumed 1/d² (with d being the true distance between the first and the second position) dependency of radio signal intensity.

Now, because such a first distance estimation is rather coarse, a first correction factor for the estimated distance is derived in the following way:
- Second position information, i.e., information which is indicative of the second position of the transmitter (e.g., the remote aircraft position in the above example) is derived.

This is achieved, when the radio signal comprises said second position information indicative of said second position of said transmitter. In other words, the second position information is transmitted with the radio signal.

For this, the radio signal comprises at least one of the group of
* an ADS-B Out signal (from a remote ADS-B Out capable transponder), and
* a FLARM signal (from a remote FLARM system), and a Mode C response signal (from a remote transponder) .

Alternatively (e.g., when the radio signal does not comprise said second position information), the second position information indicative of said second position of said transmitter is downloaded from said transmitter (e.g., after the aircraft have landed) or from a traffic monitoring service such as air traffic control.
- Furthermore, the first position of the receiver (e.g., one's own aircraft) is measured by means of a GNSS (such as a GPS receiver), and first position information, i.e., position information indicative of this first position of the receiver (e.g., own aircraft position in the above example) is derived.
- The method comprises a further step of deriving first relative position information indicative of a first relative position of the transmitter with regard to the receiver. The first relative position information comprises a relative azimuth angle (ϕ), i.e., a relative horizontal bearing, and/ or a relative inclination angle (θ), i.e., a relative vertical bearing.
- As another step, said first correction factor for said first estimation of said distance is derived using said first position information (e.g., own aircraft position), said second position information (e.g., foreign aircraft position), said measured signal intensity, and using said first relative position information or depending on the first relative position of the transmitter with regard to the receiver. The first relative position information can also be attached to the first correction factor.

According to the invention, a plurality of correction factors (i.e., at least two correction factors) is derived for radio signals from different relative positions. In other words, a second correction factor for a distance for a second radio signal from a second relative position different to the first relative position is derived. On the one hand, more than one correction factor can be derived for the same transmitter at different times and/or at different second positions, i.e. using different relative positions. Alternatively or additionally, different correction factors can be derived for different transmitters (e.g., for more than one foreign aircraft). A combination of both approaches is possible as well.

According to the invention, a subset or all of the derived correction factors are then combined to the relative-position-dependent correction function (i.e., an at least partly continuous mapping relation), e.g., comprising interpolation and/ or extrapolation and/ or averaging techniques. As an example, such a correction function can be derived that "wraps" the receiver position such that correction factors can be computed for all possible relative transmitter positions surrounding the receiver. Thus, second distance estimations become possible for more than the actually measured relative positions.

The step of deriving the correction factors is advantageously carried out on-the-fly or "online", e.g., repeatedly for one or more triples of first-position-information/ second-position-information/ signal-intensity datasets. As an alternative, the correction factors can be derived in a post-processing or "offline" mode, e.g., after the aircraft with the receiver has landed and second position information datasets have been downloaded from the aircraft with the transmitter or from a traffic monitoring service such as air traffic control. In the second situation, the first-position-information/ signal-intensity datasets (as, e.g., acquired during flight) are saved in a memory for the later post-processing derivation of the correction factors.

The described method has the advantage that a correction factor can be derived for improving the precision of future distance estimations which are solely based on radio signal intensities. For this, the correction factor is advantageously saved in a memory. In other words, for future second (i.e., improved, see below) distance estimations, no knowledge of the second position (e.g., remote aircraft position) of the transmitter are necessary any more but a second distance estimation can now be derived using, e.g., a solely radio-signal-intensity-based first distance estimation or solely the radio signal intensity itself and the correction factor that has been derived in the first place. This method can also be applied to radio signals from different transmitters. Thus, radio signal intensities are calibrated using transmitted second position information and the precision of second distance estimations based on measured radio signal intensities is improved.

Advantageously, the first and/or the second position information, i.e., the position information about the receiver and/or the transmitter, is at least indicative of an altitude, a latitude, and a longitude each (3D positions). Optionally, the position information can comprise further parameters like velocity vectors, acceleration vectors etc. Thus, a more precise distance value indicative of said true distance between the receiver and the transmitter can be derived using the first position information and the second position information. This distance value is then advantageously used in deriving said correction factor.

In another advantageous example, the radio signal which is transmitted by said transmitter comprises an identifier, in particular a unique identifier. Thus, radio signals from different transmitters can be discriminated by the receiver. Optionally, radio signals can also comprise timestamps that enable the discrimination of different radio signals from the same transmitter.

Advantageously, the correction factors are indicative of directional characteristics of a receiver antenna of the receiver and/or of a directional characteristics of a transmitter antenna of the transmitter. Thus, the reliability and precision of the second distance estimation can be further improved.

In another preferred embodiment of the invention, the method further comprises a step of deriving an output power value of the transmitter using the first (receiver) position information, the second (transmitter) position information, and the measured signal intensity. As an example, the above mentioned assumed 1/d² dependency (with d being the true distance) of radio signal intensity can be used for this. Thus, transmitter malfunctions may be detected and can be reported to the transmitter operator.

As another aspect of the invention, as soon as the correction function is known, a method for deriving at least one second estimation of a distance between a first position (i.e., own aircraft position) of at least one receiver and a second position (i.e., foreign aircraft position) of at least one transmitter comprises the following steps:
- Receiving by means of the receiver at the first position at least one radio signal which is transmitted by the transmitter at the second position.
- Measuring a signal intensity of this (advantageously pre-filtered) radio signal at the first position (e.g., own aircraft position in the above example) of said receiver.
- Deriving relative position information indicative of a relative position of the transmitter with regard to the receiver, e.g., by means of a directional receiver antenna. The relative position information comprises a relative azimuth angle (i.e., a relative horizontal bearing) and/or a relative inclination angle (i.e., a relative vertical bearing).

Thus, the relative position of the transmitter with regard to the receiver can be determined.

As the correction function used for deriving the second distance estimation is relative-position-dependent (i.e., it depends on a relative position between the receiver and the transmitter and/or has relative position information attached), this information is then used to evaluate the correction function for the present situation/relative position. Thus, the reliability of the second distance estimation can be further improved as, e.g., directional characteristics of antennas can be taken into account.
- Deriving said first estimation of said distance using the measured signal intensity, in particular solely using the measured signal intensity, of the received radio signal from the transmitter. In other words, no position information indicative of the second position is necessarily comprised in the radio signal.
- Deriving said second estimation of said distance (or, in other words, improving the first distance estimation solely relying on the radio signal intensity) using said first estimation of said distance itself or, equivalently, using the measured signal intensity, and furthermore using a correction function as discussed above.

The terms "second estimation of a distance" or equivalently "second distance estimation" and "first estimation of a distance" or equivalently "first distance estimation" as used throughout the description are characterized in the following way: a deviation (in a statistical sense such as, e.g., variance or standard deviation) of the "first distance estimation" from the "true distance" between the first and the second position is larger than a deviation (in a statistical sense such as, e.g., variance or standard deviation) of the "second distance estimation" from the "true distance" between the first and the second position. Thus, the "second distance estimation" is "closer" (in a statistical sense) to the "true distance" than the "first distance estimation". Thus, the second distance estimation is regarded as more reliable than the first distance estimation.

This improvement in precision is achieved by using a correction function to derive the "second distance estimation" from the "first distance estimation" which (e.g., solely) relies on measuring the radio signal intensity or directly using the radio signal intensity. In other words, after such a correction function has been derived in a first step (in which second position information is available), the disclosed method allows for the derivation of the second distance estimation (solely) relying on a measured radio signal intensity and the radio signal does not need to (although it can) comprise second position information any longer. In the case that both the first and the second position information is available, a positioning accuracy can be derived for the first and/or second positions and the second distance estimation can also take this positioning accuracy into account, e.g., via weighted averaging algorithms. Thus, the precision of the second distance estimation can be further improved.

The measured radio signal intensities are calibrated by the correction function. Radio signals in aviation are
- an ADS-B Out signal (from an ADS-B Out capable transponder),
- a FLARM signal (from a FLARM system),
- a Mode 3A or A response signal (from a transponder),
- a Mode C response signal (from a transponder), and
- a Mode S response signal (from a transponder) .

Some of these radio signals do comprise second position information (ADS-B Out, FLARM). Then, the above disclosed method allows for comparing the second distance estimation with a true distance which can be derived from the first and second position information and/or for deriving positioning and thus distance accuracies (see above) . On the other hand, some of these radio signals do not comprise second position information (Mode 3A or A) or at least not full second position information (Mode C, Mode S). In such a case, the above disclosed method enables the derivation of a second distance estimation based on solely measuring the radio signal intensities and applying the correction factor and/or correction function.

If the second distance estimation decreases below a distance threshold, a warning (e.g., visual and/ or acoustic and/or tactile), in particular a collision warning, is advantageously issued to an operator. Thus, hazardous collision situations can be avoided.

More advantageously, the method further comprises a step of
- Deriving an estimation of a future trajectory of the receiver (and thus, e.g., one's own aircraft flight path), in particular using said first position of said receiver, a current velocity of said receiver, and/or a current acceleration of said receiver and/ or other flight data such as vertical velocities or wind speeds. These parameters are advantageously determined by flight control systems and input to a collision warning device (see below) via an interface. Alternatively or in addition, an estimation of a future trajectory of said transmitter (and thus, e.g., of foreign aircraft' flight paths) is derived, in particular using said second position of said transmitter, a derived current velocity of said transmitter, and/or a derived current acceleration of said transmitter and/or other flight data. As an option to online estimating these parameters, at least a subset of them can be received encoded in the radio signal. Different trajectory calculation schemes can be applied for different flight situation such as, e.g., normal flight, thermalling, taxiing etc.

The method can further comprise a step of
- Deriving an estimation of a future distance (i.e., second distance estimations for the future) between said receiver and said transmitter using a future trajectory of said receiver (or equivalent data) and/ or using (a) future trajectory/-ies of said transmitter(s) (or equivalent data). An additional warning is issued when the estimation of the future distance decreases below the distance threshold. Thus, even more hazardous collision situation can be avoided.

Note: As an alternative to deriving the actual trajectories of the receiver and/or of the transmitter, the above mentioned data (position, current velocity, current acceleration, flight data) can be used directly in said step of deriving the estimation of the future distance between said receiver and said transmitter ("equivalent data").

Advantageously, the warning is suppressed if an altitude of the transmitter differs more than 500 ft (i.e., 152.4 m), preferably 1000 ft (i.e., 304.8 m), more preferably 1500 ft (i.e., 457.2 m), from an altitude of the receiver. In other words, the warning is only issued if the altitude difference of the transmitter and the receiver are within a limit of, e.g., 1000 ft. This limit can also be user-settable, e.g., depending on an expected aircraft density and/or on safety needs.

Advantageously, the radio signal comprises an identifier, in particular a unique identifier of the transmitter. Thus, radio signals from different transmitters, e.g., of different aircraft can be discriminated.

Advantageously, the radio signal is filtered prior to measuring the signal intensity. Suitable filtering methods can, e.g., comprise SAW-bandpass filters. This has the advantage that intensity measurements become more reliable and are less prone to noise.

As another aspect of the invention, a collision warning device, in particular for use in aviation, comprises at least one receiver at a first position (e.g., own aircraft position) with at least one receiver antenna for receiving at least one radio signal which is transmitted by at least one transmitter at a second position (e.g., foreign aircraft position). These positions are separated by a "true" variable distance.

Furthermore, the collision warning device comprises a localization device, in particular a GNSS (e.g., a GPS receiver), for measuring the (first) position of said receiver (e.g., own aircraft position in the above example) and deriving first position information indicative of this first position and/or for deriving first positioning accuracy.

The collision warning device further comprises an output unit (e.g., visual, acoustic, tactile) for issuing a warning, in particular a collision warning, to an operator, e.g., a pilot.

The collision warning device further comprises a control unit which is adapted and structured to carry out the steps of a method for deriving a correction factor and/or correction function as disclosed above. Furthermore, the control unit is adapted and structured to carry out the steps of a method for deriving at least one second estimation of said distance as disclosed above. Thus, such a collision warning device can be mounted in an aircraft and help to prevent hazardous collision conditions.

Advantageously, the collision warning device further comprises an interface for connecting it to a flight control system for receiving flight data. Such flight control data can, e.g., comprise current rudder positions, velocities, accelerations, and/or bearings of the aircraft. Thus, these parameters can be compared to parameters from the GNSS and/or used for trajectory predictions (see above).

Advantageously, the collision warning device further comprises a memory for storing derived correction factors and/or correction functions. Thus, these correction factors do not need to be re-derived for every flight. For offline-derivation of the correction factor(s) and/or correction function(s), the collision warning device can be adapted for storing time-resolved first position information and/or said signal intensity datasets.

The described embodiments and/or features similarly pertain to both the apparatuses and the methods. Synergetic effects may arise from different combinations of these embodiments and/or features although they might not be described in detail.

### Brief Description of the Drawings

The invention and its embodiments will be more fully appreciated by reference to the following detailed description of presently preferred but nonetheless illustrative embodiments in accordance with the present invention when taken in conjunction with the accompanying drawings.
Fig. 1 shows a top view of an air traffic situation involving 4 planes A, B, C, and D,
fig. 2 shows a schematic of a collision warning device,
fig. 3 shows a schematic of a correction function C for different relative azimuth angles ϕ.

### Modes for Carrying Out the Invention

### Description of the Figures:

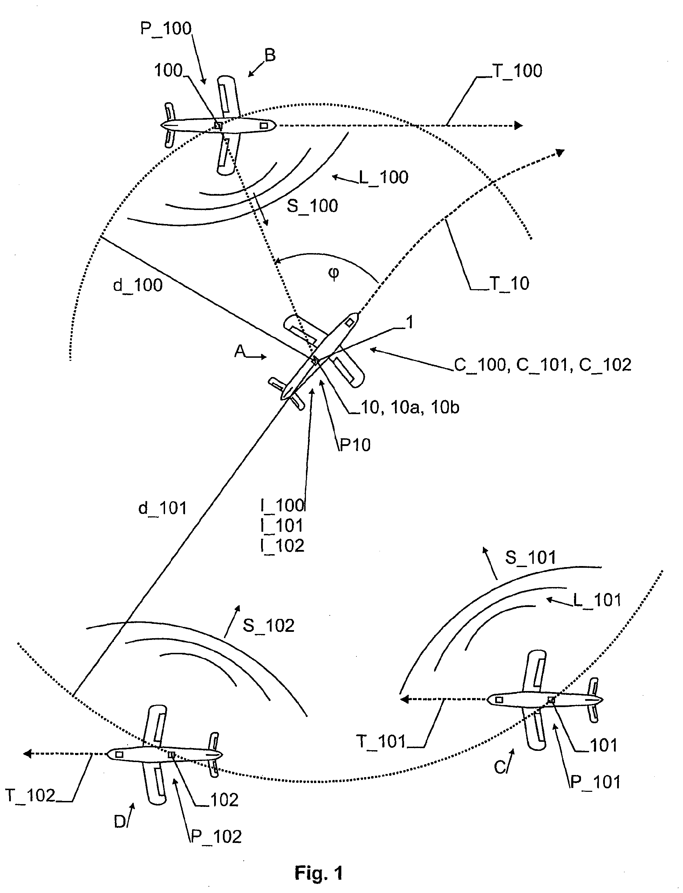

Fig. 1 shows a top view of an air traffic situation involving 4 aircraft A, B, C, and D. The aircraft A, B, C, and D can be of different types, e.g., comprising gliders, motor planes, commercial aircraft, paragliders, ultralight planes, gyrocopters, helicopters, etc.

At the shown point in time, aircraft A is at position P_10, aircraft B is at position P_100, aircraft C is at position P_101, and aircraft D is at position P_102. Positions can, e.g., be defined by their latitude, longitude, and altitude. The true distances between the aircraft are d_100 between aircraft A and B and d_101 between aircraft A and C and between aircraft A and D (dotted circle segments). Radio signals S_100, S_101, and S_102 are transmitted from onboard transmitters/ transponders 100, 101 and 102, respectively, and they comprise second position information L_100 for aircraft B and second position information L_101 for aircraft C, respectively. Second position information is indicative of the respective positions. No full second position information is transmitted from aircraft D (see below). Specifically, radio signal S_100 is a digital FLARM signal at, e.g., 868.4 MHz which encodes GPS position and altitude of aircraft C as well as an aircraft's identifier. Radio signal S_101 comprises a Mode S signal at, e.g., 1090 MHz and a FLARM signal at, e.g., 868.2 MHz. The FLARM signal encodes the aircraft's GPS position and altitude as well as a identifier, whereas the Mode S signal only encodes altitude and identifiers. Radio signal S_102 is a Mode S signal which encodes the aircraft's altitude and identifiers but no GPS position.

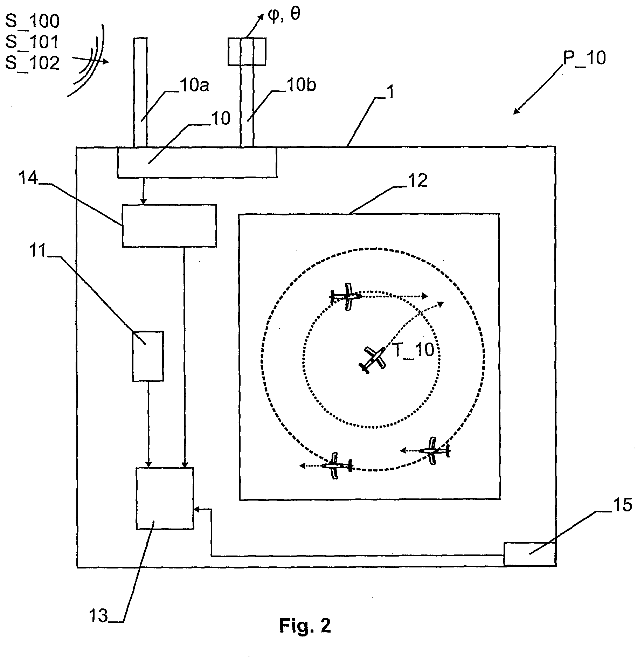

As it is schematically shown in fig. 2, the collision warning device 1 of aircraft A receives the radio signals S_100, S_101, and S_102 by means of antennas 10a (for FLARM signals) and 10b (for ADS and SSR signals). Antenna 10b is a directional receiver antenna which is adapted to sense a direction of the received signals, i.e., a relative azimuth angle ϕ and a relative inclination angle θ. A common receiver 10 is connected to the antennas 10a and 10b for receiving the actual signals. Then, the radio signals are filtered and processed by a signal processing unit 14 and transmitted to a control unit 13. The control unit 13 also receives first position information L_10 indicative of the first position P_10 of aircraft A from a GPS unit 11. Other GNSS devices are suitable as well. Furthermore, the control unit 13 receives flight data such as, e.g., vertical velocity, acceleration data, and gyroscopic data from flight control systems via an interface 15. From all this information or at least a subset of this information, a future trajectory T_10 of aircraft A and estimated trajectories T_100, T_101, and T_102 for aircraft B, C, and D are derived by the control unit 13 (dashed arrows in fig. 1). The document http://www.flarm.com/files/basic_presentation _en .ppt (as accessed on July 25, 2012) gives details on this.

Furthermore, the control unit 13 measures signal intensities I_100, I_101, and I_102 of the received radio signals S_100, S_101, and S_102. Then, estimations of the distances d_100, d_101, and d_102 are derived using these measured radio signal intensities I_100, I_101, and I_102 assuming a 1/d² dependence of signal intensities.

As a next step, correction factors C_100, C_101, and C_102 are derived for calibrating the measured radio signal intensities by the control unit 13 using these distance estimates and - in the cases of the aircraft B and C - using the true distances as derived from the available first and second position information datasets. In the case of aircraft D where no second position information is available to the control unit 13, a measured signal intensity I_102 is similar to the intensity of the (SSR-part of the) radio signal S_101 from aircraft C when rotationally symmetric receiver and transmitter antenna characteristics are assumed. Thus, a correction factor C_102 for aircraft D is assumed to be similar to the correction factor C_101 for the SSR-signal from aircraft C (identical true distances d_101). As an additional option, relative position information between transmitter and receiver can be taken into account, e.g., for a specific azimuth angle or angular range ϕ and/or for a specific inclination angle or angular range θ (not shown).

In a next step, e.g., when aircraft C leaves and reenters a range for receiving radio signal S_101 (e.g., 2-5 km for FLARM signals, > 10 km for SSR and ADS signals), a second distance estimation can be derived using a newly measured radio signal intensity and using the pre-derived correction factor as described above.

Then, the present traffic situation is displayed on an output unit 12 (screen) and a visual and acoustic warning is issued to the pilot of aircraft A if the pilot's own future trajectory T_10 and any of the future trajectories T_100, T_101, T_102 of the adjacent aircraft B, C, and D exhibit potential mid-air collision danger, i.e., if the projected trajectory distance decreases below a distance threshold of, e.g., 30 m. This warning is suppressed, however, if the altitudes of the respective aircraft differ by more than 100 ft (i.e., 30.5 m).

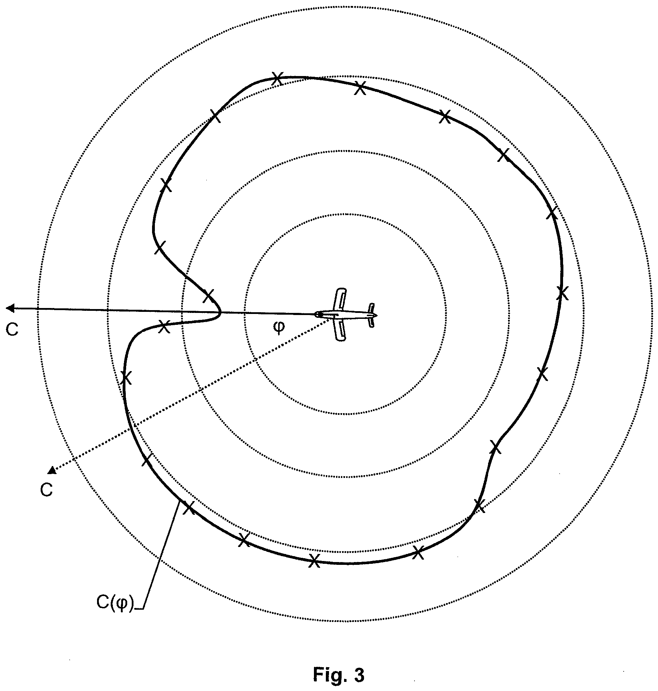

Fig. 3 shows a schematic of a correction function C for different relative azimuth angles ϕ. In other words, a plurality of correction values ("X") is derived for different azimuth angles ϕ (or relative horizontal bearings) and interpolation is applied to gather a smooth correction function for all possible azimuth angles ϕ (thick line C (ϕ)). Thus, this correction function can be evaluated for any azimuth angle ϕ if a ϕ-resolved radio signal is received from which a second distance estimation is to be derived. A similar approach is suitable for different relative inclination angles θ (not shown).

### Definitions:

The term "signal intensity" of the received radio signal is sometimes also referred to as "RSSI" or "Received Signal Strength Indication".

The term "FLARM" relates to an electronic device, in particular for aviation, that periodically transmits information about its own position (latitude, longitude, and altitude) as well as an identifier over a digital radio transmitter (encoded in a FLARM signal). Optionally, other information such as future trajectory predictions can be comprised in the FLARM signal. See, e.g., http://en.wikipedia.org/wiki/FLARM as accessed on May 21, 2012 for further information.

The term "SSR" relates to "Secondary surveillance radar" interrogation and response signals (see, e.g., http://en.wikipedia.org/wiki/Secondary_surveillance _radar as accessed on May 15, 2012) which can be used for two-way communications between several aircraft and/or between a single aircraft and ground stations, typically using several frequencies. Different transponder modes exist, e.g., Mode C which encodes the altitude in 100 ft increments, or Mode S which additionally encodes, e.g., an identifier. Typically, transponders only transmit as a response (response signal) to an SSR-interrogation, but they can also transmit without prior interrogation.

The term "ADS" relates to "Automatic dependent surveillance" (see, e.g., http://en.wikipedia.org/wiki/ Automatic Dependent Surveillance as accessed on May 15, 2012) which can also be used for two-way communications between several aircraft and/or a single aircraft and ground stations. An ADS-B Out signal is a periodically transmitted signal from an onboard transmitter in an aircraft which encodes identifiers, current position, altitude, and velocity.

### Summary of a preferred embodiment

An improved method for avoiding mid-air collision in aviation is disclosed. The method relies on a calibration of radio signal intensities I with radio signal encoded position information L. In other words, after a first reception of a radio signal S advantageously comprising remote aircraft position information L, the radio signal intensity I is measured and a correction factor C is derived. During a next encounter of the radio signal S, a second distance estimation d can be derived using the signal intensity I and the correction factor C. Preferably, relative positioning data is acquired together with the correction factor C and a plurality of correction factors for different relative positions is combined in an at least partly continuous correction function.

### Notes:

Time-of-flight information of the radio signal between the transmitter and the receiver can in addition be used to derive the correction factor and/or to further improve the precision of the second estimation of the distance. For this, the radio signal comprises a time-stamp.

### Note:

While there are shown and described presently preferred embodiments of the invention, it is to be distinctly understood that the invention is not limited thereto but may be otherwise variously embodied and practiced within the scope of the following claims.

## Claims

1. A method for deriving a relative-position-dependent correction function (C) for at least one first estimation of a distance (d_100) in aviation between a first position (P_10) of at least one receiver (10) in a first aircraft (A) and a second position (P_100) of at least one transmitter (100) in a second aircraft (B), the method comprising the steps of
- receiving by means of said receiver (10) at least one radio signal (S_100) which is transmitted by said transmitter (100),
- deriving second position information (L_100) indicative of said second position (P_100) of said transmitter (100),
wherein said radio signal (S_100) comprises said second position information (L_100) indicative of said second position (P_100) of said transmitter (100) or
wherein said second position information (L_100) indicative of said second position (P_100) of said transmitter (100) is downloaded from said transmitter (100) or from a traffic monitoring service,
- measuring said first position (P_10) of said receiver (10) by means of a GNSS receiver and deriving first position information (L_10) indicative of said first position (P_10),
- deriving a first relative position information indicative of a first relative position of said transmitter (100) with regard to said receiver (10), wherein said first relative position information comprises a relative azimuth angle (ϕ) and/or a relative inclination angle (θ),
wherein
said at least one transmitter (100) comprises at least one of the group consisting of
- an ADS-B Out capable transponder and
- a FLARM and a Mode C or a Mode S transponder and
in that said radio signal (S_100) comprises at least one of the group consisting of
- an ADS-B Out signal and
- a FLARM and a Mode C signal,
**characterized in that** the method comprises further steps of
- measuring a signal intensity (I_100) of said radio signal (S_100) at said first position (P_10) of said receiver (10),
- deriving a first correction factor (C_100) for said first estimation of said distance (d_100) using said first position information (L_10), said second position information (L_{_}100), said signal intensity (I_{_}100), and said first relative position information,
- deriving a second correction factor (C_101) for a distance for a second radio signal (S_101) from a second relative position different to the first relative position, and
- combining the first correction factor (C_100) and the second correction factor (C_101) to the relative-position-dependent correction function (C).

2. The method of claim 1 further comprising a step of
- deriving said first estimation of said distance (d_100) using said signal intensity (I_100).

3. The method of any of the preceding claims wherein said correction factor (C_100) is indicative of directional characteristics of a receiver antenna (10a) of said receiver (10) and/or of directional characteristics of a transmitter antenna (100a) of said transmitter (100) .

4. The method of any of the preceding claims wherein said correction factors (C_100, C_100*'*) are derived for the same transmitter (100) at different times and/or wherein said correction factors (C_100, C_101) are derived for different transponders (100, 101) with different second positions (P_100, P_101).

5. The method of any of the preceding claims further comprising a step of
- deriving an output power value of said transmitter (100) using said first position information (L_10), said second position information (L_100), and said signal intensity (I_100).

6. The method of any of the preceding claims wherein said second position information (L_100) indicative of said second position (P_100) of said transmitter (100) is downloaded from air traffic control.

7. A method for deriving at least one second estimation of a distance (d_100) in aviation between a first position (P_10) of at least one receiver (10) in a first aircraft (A) and a second position (P_100) of at least one transmitter (100) in a second aircraft (B), the method comprising the steps of
- receiving by means of said receiver (10) at least one radio signal (S_100) which is transmitted by said transmitter (100),
- measuring a signal intensity (I_100) of said radio signal (S_100) at said first position (P_10) of said receiver (10),
- deriving relative position information indicative of a relative position of said transmitter (100) with regard to said receiver (10), wherein said relative position information comprises a relative azimuth angle (ϕ) and/or a relative inclination angle (θ),
wherein
said at least one transmitter (100) comprises at least one of the group consisting of
- an ADS-B Out capable transponder,
- a FLARM system,
- a Mode 3A or A capable transponder,
- a Mode C capable transponder, and
- a Mode S capable transponder and
wherein said radio signal (S_100) comprises at least one of the group consisting of
- an ADS-B Out signal,
- a FLARM signal,
- a Mode 3A or A signal,
- a Mode C signal, and
- a Mode S signal,
**characterized in that** the method further comprises a step of
- deriving a first estimation of said distance (d_100) using said signal intensity (I_100),
- deriving said second estimation of said distance (d_100) using said signal intensity (I_100), in particular solely using said signal intensity (I_100), and using a correction function (C) of any of the preceding claims,
wherein said correction function (C) is dependent on said relative position of said transmitter (100) with regard to said receiver (10),
wherein said correction function (C) for deriving said second estimation of said distance (d_100) is evaluated using said relative position information, and
wherein a statistical deviation of said second estimation of said distance (d_100) from said distance (d_100) is smaller than a statistical deviation of said first estimation of said distance (d_100) from said distance (d_100).

8. The method of claim 7 wherein said first estimation of said distance (d_100) is derived using solely said signal intensity (I_100).

9. The method of any of the claims 7 to 8 further comprising a step of
- deriving an estimation of a future distance (d_100, d_101) between said receiver (10) and said transmitter (100, 101) using said first position (P_10) of said receiver (10), a current velocity of said receiver (10), and/or a current acceleration of said receiver (10) and/or furthermore using said second position (P_100) of said transmitter (100), a current velocity of said transmitter (100), and/or a current acceleration of said transmitter (100),
wherein a warning is additionally issued when said estimation of said future distance (d_100) decreases below a distance threshold.

10. The method of claim 9 further comprising a step of
- deriving an estimation of a future trajectory (T_10) of said receiver (10), in particular using said first position (P_10) of said receiver (10), a current velocity of said receiver (10), and/or a current acceleration of said receiver (10), and/or
- deriving an estimation of a future trajectory (T_100, T_101) of said transmitter (100, 101), in particular using said second position (P_100) of said transmitter (100), a current velocity of said transmitter (100), and/or a current acceleration of said transmitter (100),
wherein said estimation of said future trajectory (T_10) of said receiver (10) and/or said estimation of said future trajectory (T_100, T_101) of said transmitter (100, 101) is or are used in said step of deriving said estimation of said future distance (d_100, d_101) between said receiver (10) and said transmitter (100, 101) .

11. A collision warning device (1) for use in aviation comprising
- at least one receiver (10) at a first position (P_10) with at least one receiver antenna (10a) for receiving at least one radio signal (S_100) which is transmitted by at least one transmitter (100) at a second position (P_100), wherein said first position (P_10) and said second position (P_100) are separated by a variable distance (d_100),
- a localization device (11), namely a GNSS receiver (11), for measuring said first position (P_10) of said receiver (10) and deriving first position information (L_10) indicative of said first position (P_10),
- an output unit (12) for issuing a warning, in particular a collision warning, to an operator,
**characterized in that**
- a control unit (13) of the collision warning device (1) is adapted to carry out the steps of a method of any of the claims 1 to 6 for deriving at least one correction function (C) and to carry out the steps of a method of any of the claims 7 to 10 for deriving at least one second estimation of said distance (d_100).

12. The collision warning device (1) of claim 11 further comprising an interface for connecting said collision warning device (1) to a flight control system for receiving flight data, in particular a current velocity and/or a current acceleration and/or a current bearing and/or a current rudder position, from said flight control system.

## Patentansprüche

1. Ein Verfahren zum Bestimmen einer relativpositionsabhängigen Korrekturfunktion (C) für mindestens eine erste Abschätzung einer Entfernung (d_100) in der Luftfahrt zwischen einer ersten Position (P_10) mindestens eines Empfängers (10) in einem ersten Luftfahrzeug (A) und einer zweiten Position (P_100) mindestens eines Senders (100) in einem zweiten Luftfahrzeug (B), wobei das Verfahren die folgenden Schritte umfasst
- Empfangen mindestens eines Funksignals (S_100), das von dem Sender (100) ausgesendet wird, mit Hilfe des Empfängers (10),
- Bestimmen einer zweiten Positionsinformation (L_100), die die zweite Position (P_100) des Senders (100) angibt,
wobei das Funksignal (S_100) die zweite Positionsinformation (L_100) umfasst, die die zweite Position (P_100) des Senders (100) angibt, oder
wobei die zweite Positionsinformation (L_100), die die zweite Position (P_100) des Senders (100) angibt, von dem Sender (100) oder von einem Verkehrsüberwachungsdienst heruntergeladen wird,
- Messen der ersten Position (P_10) des Empfängers (10) mit Hilfe eines GNSS-Empfängers und Bestimmen einer ersten Positionsinformation (L_10), die die erste Position (P_10) angibt,
- Bestimmen einer ersten relativen Positionsinformation, die eine erste relative Position des Senders (100) in Bezug auf den Empfänger (10) angibt, wobei die erste relative Positionsinformation einen relativen Azimutwinkel (ϕ) und/oder einen relativen Neigungswinkel (θ) umfasst,
wobei
der mindestens eine Sender (100) mindestens eines der Elemente umfasst aus der Gruppe bestehend aus
- einem ADS-B Out fähigen Transponder und
- einem FLARM und einem Mode C oder Mode S Transponder und
wobei das Funksignal (S_100) mindestens eines der Elemente umfasst aus der Gruppe bestehend aus
- einem ADS-B Out-Signal und
- einem FLARM und einem Mode-C-Signal,
**dadurch gekennzeichnet, dass** das Verfahren weitere Schritte umfasst
- Messen einer Signalintensität (I_100) des Funksignals (S_100) an der ersten Position (P_10) des Empfängers (10),
- Bestimmen eines ersten Korrekturfaktors (C_100) für die erste Abschätzung der Entfernung (d_100) unter Verwendung der ersten Positionsinformation (L_10), der zweiten Positionsinformation (L_100), der Signalintensität (I_100) und der ersten relativen Positionsinformation,
- Bestimmen eines zweiten Korrekturfaktors (C_101) für eine Entfernung für ein zweites Funksignal (S_101) von einer zweiten relativen Position, die sich von der ersten relativen Position unterscheidet, und
- Kombinieren des ersten Korrekturfaktors (C_100) und des zweiten Korrekturfaktors (C_101) zur relativ-positionsabhängigen Korrekturfunktion (C).

2. Das Verfahren nach Anspruch 1 weiterhin umfassend einen Schritt
- Bestimmen der ersten Abschätzung der Entfernung (d_100) unter Verwendung der Signalintensität (I_100).

3. Das Verfahren nach einem der vorhergehenden Ansprüche wobei der Korrekturfaktor (C_100) die Richtcharakteristiken einer Empfängerantenne (10a) des Empfängers (10) und/oder die Richtcharakteristiken einer Senderantenne (100a) des Senders (100) angibt.

4. Das Verfahren nach einem der vorhergehenden Ansprüche, wobei die Korrekturfaktoren (C_100, C_100') für denselben Sender (100) zu verschiedenen Zeiten bestimmt werden und/oder wobei die Korrekturfaktoren (C_100, C_101) für verschiedene Transponder (100, 101) mit verschiedenen zweiten Positionen (P_100, P_101) bestimmt werden.

5. Das Verfahren nach einem der vorhergehenden Ansprüche weiterhin umfassend einen Schritt
- Bestimmen eines Ausgangsleistungswertes des Senders (100) unter Verwendung der ersten Positionsinformation (L_10), der zweiten Positionsinformation (L_100) und der Signalintensität (I_100).

6. Das Verfahren nach einem der vorhergehenden Ansprüche, wobei die zweite Positionsinformation (L_100), die die zweite Position (P_100) des Senders (100) angibt, von der Flugsicherung heruntergeladen wird.

7. Ein Verfahren zum Bestimmen mindestens einer zweiten Abschätzung einer Entfernung (d_100) in der Luftfahrt zwischen einer ersten Position (P_10) mindestens eines Empfängers (10) in einem ersten Luftfahrzeug (A) und einer zweiten Position (P_100) mindestens eines Senders (100) in einem zweiten Luftfahrzeug (B), wobei das Verfahren die folgenden Schritte umfasst
- Empfangen mindestens eines Funksignals (S_100), das von dem Sender (100) ausgesendet wird, mit Hilfe des Empfängers (10),
- Messen einer Signalintensität (I_100) des Funksignals (S_100) an der ersten Position (P_10) des Empfängers (10),
- Bestimmen einer relativen Positionsinformation, die eine relative Position des Senders (100) in Bezug auf den Empfänger (10) angibt, wobei die relative Positionsinformation einen relativen Azimutwinkel (ϕ) und/oder einen relativen Neigungswinkel (θ) umfasst,
wobei
der mindestens eine Sender (100) mindestens eines der Elemente umfasst aus der Gruppe bestehend aus
- einem ADS-B Out fähigen Transponder,
- einem FLARM-System,
- einem Mode 3A oder A fähigen Transponder,
- einem Mode-C-fähigen Transponder und
- einem Mode-S-fähigen Transponder und
wobei das Funksignal (S_100) mindestens eines der Elemente umfasst aus der Gruppe bestehend aus
- einem ADS-B Out-Signal,
- einem FLARM-Signal,
- einem Mode 3A oder A Signal,
- einem Mode-C-Signal und
- einem Mode-S-Signal,
**dadurch gekennzeichnet, dass** das Verfahren weiterhin einen Schritt umfasst
- Bestimmen einer ersten Abschätzung der Entfernung (d_100) unter Verwendung der Signalintensität (I_100),
- Bestimmen der zweiten Abschätzung der Entfernung (d_100) unter Verwendung der Signalintensität (I_100), insbesondere unter ausschliesslicher Verwendung der Signalintensität (I_100), und unter Verwendung einer Korrekturfunktion (C) nach einem der vorhergehenden Ansprüche,
wobei die Korrekturfunktion (C) von der relativen Position des Senders (100) in Bezug auf den Empfänger (10) abhängig ist,
wobei die Korrekturfunktion (C) zum Bestimmen der zweiten Abschätzung der Entfernung (d_100) unter Verwendung der relativen Positionsinformation ausgewertet wird, und
wobei eine statistische Abweichung der zweiten Abschätzung der Entfernung (d_100) von der Entfernung (d_100) kleiner ist als eine statistische Abweichung der ersten Abschätzung der Entfernung (d_100) von der Entfernung (d_100).

8. Das Verfahren nach Anspruch 7, wobei die erste Abschätzung der Entfernung (d_100) ausschliesslich unter Verwendung der Signalintensität (I_100) bestimmt wird.

9. Das Verfahren nach einem der Ansprüche 7 bis 8 weiterhin umfassend einen Schritt
- Bestimmen einer Abschätzung einer zukünftigen Entfernung (d_100, d_101) zwischen dem Empfänger (10) und dem Sender (100, 101) unter Verwendung der ersten Position (P_10) des Empfängers (10), einer aktuellen Geschwindigkeit des Empfängers (10) und/oder einer aktuellen Beschleunigung des Empfängers (10) und/oder ferner unter Verwendung der zweiten Position (P_100) des Senders (100), einer aktuellen Geschwindigkeit des Senders (100) und/oder einer aktuellen Beschleunigung des Senders (100),
wobei zusätzlich eine Warnung ausgegeben wird, wenn die Abschätzung der zukünftigen Entfernung (d_100) unter einen Entfernungsschwellenwert sinkt.

10. Das Verfahren nach Anspruch 9 weiterhin umfassend einen Schritt
- Bestimmen einer Abschätzung einer zukünftigen Trajektorie (T_10) des Empfängers (10), insbesondere unter Verwendung der ersten Position (P_10) des Empfängers (10), einer aktuellen Geschwindigkeit des Empfängers (10) und/oder einer aktuellen Beschleunigung des Empfängers (10), und/oder
- Bestimmen einer Abschätzung einer zukünftigen Trajektorie (T_100, T_101) des Senders (100, 101), insbesondere unter Verwendung der zweiten Position (P_100) des Senders (100), einer aktuellen Geschwindigkeit des Senders (100) und/oder einer aktuellen Beschleunigung des Senders (100),
wobei die Abschätzung der zukünftigen Trajektorie (T_10) des Empfängers (10) und/oder die Abschätzung der zukünftigen Trajektorie (T_100, T_101) des Senders (100, 101) in dem Schritt des Bestimmens der Abschätzung der zukünftigen Entfernung (d_100, d_101) zwischen dem Empfänger (10) und dem Sender (100, 101) verwendet wird oder werden.

11. Eine Kollisionswarnvorrichtung (1) zur Verwendung in der Luftfahrt umfassend
- mindestens einen Empfänger (10) an einer ersten Position (P_10) mit mindestens einer Empfängerantenne (10a) zum Empfangen mindestens eines Funksignals (S_100), das von mindestens einem Sender (100) an einer zweiten Position (P_100) gesendet wird, wobei die erste Position (P_10) und die zweite Position (P_100) durch eine variable Entfernung (d_100) getrennt sind,
- eine Lokalisierungsvorrichtung (11), nämlich einen GNSS-Empfänger (11), zum Messen der ersten Position (P_10) des Empfängers (10) und zum Bestimmen einer ersten Positionsinformation (L_10), die die erste Position (P_10) angibt,
- eine Ausgabeeinheit (12) zur Ausgabe einer Warnung, insbesondere einer Kollisionswarnung, an einen Bediener,
**dadurch gekennzeichnet, dass**
- eine Steuereinheit (13) der Kollisionswarnvorrichtung (1) so ausgestaltet ist, die Schritte eines Verfahrens nach einem der Ansprüche 1 bis 6 zum Bestimmen mindestens einer Korrekturfunktion (C) und die Schritte eines Verfahrens nach einem der Ansprüche 7 bis 10 zum Bestimmen mindestens einer zweiten Abschätzung der Entfernung (d_100) durchzuführen.

12. Die Kollisionswarnvorrichtung (1) nach Anspruch 11 weiterhin umfassend eine Schnittstelle zum Verbinden der Kollisionswarnvorrichtung (1) mit einem Flugsteuerungssystem, um Flugdaten, insbesondere eine aktuelle Geschwindigkeit und/oder eine aktuelle Beschleunigung und/oder eine aktuelle Peilung und/oder eine aktuelle Ruderposition, von dem Flugsteuerungssystem zu empfangen.

## Revendications

1. Procédé de dérivation d'une fonction de correction dépendant d'une position relative (C) pour au moins une première estimation d'une distance (d_100) en vol entre une première position (P_10) d'au moins un récepteur (10) dans un premier aéronef (A) et une seconde position (P_100) d'au moins un émetteur (100) dans un second aéronef (B), le procédé comprenant les étapes suivantes
- recevoir au moyen dudit récepteur (10) au moins un signal radio (S_100) qui est transmis par ledit émetteur (100),
- obtenir une deuxième information de position (L_100) indiquant la deuxième position (P_100) de l'émetteur (100),
dans lequel ledit signal radio (S_100) comprend ladite information de seconde position (L_100) indiquant ladite seconde position (P_100) dudit émetteur (100) ou
dans lequel les informations relatives à la deuxième position (L_100), indicatives de la deuxième position (P_100) de l'émetteur (100), sont téléchargées à partir de l'émetteur (100) ou d'un service de surveillance du trafic,
- mesurer ladite première position (P_10) dudit récepteur (10) au moyen d'un récepteur GNSS et obtenir des informations sur la première position (L_10) indicatives de ladite première position (P_10),
- obtenir une première information de position relative indiquant une première position relative dudit émetteur (100) par rapport audit récepteur (10), cette première information de position relative comprenant un angle d'azimut relatif (ϕ) et/ou un angle d'inclinaison relatif (θ),
dans lequel
ledit au moins un émetteur (100) comprend au moins l'un des éléments du groupe consistant en
- un transpondeur compatible ADS-B Out et
- un transpondeur FLARM et un transpondeur mode C ou mode S et
en ce que ledit signal radio (S_100) comprend au moins l'un des éléments du groupe consistant en
- un signal ADS-B Out et
- un signal FLARM et un signal de mode C,
**caractérisé par le fait que** le procédé comprend les étapes suivantes
- mesurer l'intensité du signal (I_100) dudit signal radio (S_100) à la première position (P_10) dudit récepteur (10),
- calculer un premier facteur de correction (C_100) pour la première estimation de la distance (d_100) à l'aide de la première information de position (L_10), de la deuxième information de position (L_100), de l'intensité du signal (I_100) et de la première information de position relative,
- calculer un deuxième facteur de correction (C_101) pour une distance d'un deuxième signal radio (S_101) à partir d'une deuxième position relative différente de la première position relative, et
- combiner le premier facteur de correction (C_100) et le deuxième facteur de correction (C_101) à la fonction de correction (C) dépendant de la position relative.

2. Procédé selon la revendication 1 comprend en outre une étape consistant à
- calculer la première estimation de la distance (d_100) à l'aide de l'intensité du signal (I_100).

3. Procédé selon l'une quelconque des revendications précédentes, dans laquelle ledit facteur de correction (C_100) est indicatif des caractéristiques directionnelles d'une antenne de réception (10a) dudit récepteur (10) et/ou des caractéristiques directionnelles d'une antenne d'émission (100a) dudit émetteur (100).

4. Procédé selon l'une des revendications précédentes dans laquelle les facteurs de correction (C_100, C_100') sont calculés pour le même émetteur (100) à différents moments et/ou dans laquelle les facteurs de correction (C_100, C_101) sont calculés pour différents transpondeurs (100, 101) avec différentes secondes positions (P_100, P_101).

5. Procédé selon l'une des revendications précédentes comprend en outre une étape consistant à
- calculer une valeur de puissance de sortie dudit émetteur (100) à l'aide de la première information de position (L_10), de la deuxième information de position (L_100) et de l'intensité du signal (I_100).

6. Procédé selon l'une des revendications précédentes dans laquelle les informations relatives à la seconde position (L_100) indiquant la seconde position (P_100) de l'émetteur (100) sont téléchargées à partir du contrôle du trafic aérien.

7. Procédé permettant d'obtenir au moins une seconde estimation d'une distance (d_100) en vol entre une première position (P_10) d'au moins un récepteur (10) dans un premier aéronef (A) et une seconde position (P_100) d'au moins un émetteur (100) dans un second aéronef (B), le procédé comprenant les étapes suivantes
- recevoir au moyen dudit récepteur (10) au moins un signal radio (S_100) qui est transmis par ledit émetteur (100),
- mesurer l'intensité du signal (I_100) dudit signal radio (S_100) à la première position (P_10) dudit récepteur (10),
- obtenir des informations sur la position relative indiquant une position relative dudit émetteur (100) par rapport audit récepteur (10), lesdites informations sur la position relative comprenant un angle d'azimut relatif (ϕ) et/ou un angle d'inclinaison relatif (θ),
dans lequel
ledit au moins un émetteur (100) comprend au moins l'un des éléments du groupe consistant en
- un transpondeur compatible ADS-B Out,
- un système FLARM,
- un transpondeur compatible avec le mode 3A ou A,
- un transpondeur compatible avec le mode C, et
- un transpondeur compatible avec le mode S et
dans lequel ledit signal radio (S_100) comprend au moins l'un des éléments du groupe consistant en
- un signal ADS-B Out,
- un signal FLARM,
- un signal de mode 3A ou A,
- un signal de mode C, et
- un signal de mode S,
**caractérisé en ce que** le procédé comprend en outre une étape consistant à
- obtenir une première estimation de ladite distance (d_100) à l'aide de l'intensité du signal (I_100),
- obtenir ladite seconde estimation de ladite distance (d_100) en utilisant ladite intensité de signal (I_100), en particulier uniquement en utilisant ladite intensité de signal (I_100), et en utilisant une fonction de correction (C) de l'une quelconque des revendications précédentes,
dans laquelle ladite fonction de correction (C) dépend de la position relative de l'émetteur (100) par rapport au récepteur (10),
dans lequel ladite fonction de correction (C) pour obtenir ladite seconde estimation de ladite distance (d_100) est évaluée à l'aide de ladite information de position relative, et
dans lequel un écart statistique de ladite seconde estimation de ladite distance (d_100) par rapport à ladite distance (d_100) est inférieur à un écart statistique de ladite première estimation de ladite distance (d_100) par rapport à ladite distance (d_100).

8. Procédé selon la revendication 7 dans laquelle la première estimation de la distance (d_100) est obtenue en utilisant uniquement l'intensité du signal (I_100).

9. Procédé selon l'une des revendications 7 à 8 comprend en outre une étape consistant à
- l'estimation d'une future distance (d_100, d_101) entre ledit récepteur (10) et ledit émetteur (100, 101) en utilisant la première position (P_10) dudit récepteur (10), de la vitesse actuelle dudit récepteur (10) et/ou de l'accélération actuelle dudit récepteur (10) et/ou en utilisant en outre la deuxième position (P_100) dudit émetteur (100), la vitesse actuelle dudit émetteur (100) et/ou l'accélération actuelle dudit émetteur (100),
dans laquelle un avertissement est également émis lorsque l'estimation de la distance future (d_100) passe en dessous d'un seuil de distance.

10. Procédé selon la revendication 9 comprend en outre une étape consistant à
- estimer une trajectoire future (T_10) dudit récepteur (10), en particulier à l'aide de la première position (P_10) dudit récepteur (10), une vitesse actuelle dudit récepteur (10), et/ou une accélération actuelle dudit récepteur (10), et/ou
- estimer une trajectoire future (T_100, T_101) dudit émetteur (100, 101), en particulier à l'aide de la seconde position (P_100) dudit émetteur (100), de la vitesse actuelle dudit émetteur (100) et/ou de l'accélération actuelle dudit émetteur (100),
dans lequel ladite estimation de ladite trajectoire future (T_10) dudit récepteur (10) et/ou ladite estimation de ladite trajectoire future (T_100, T_101) dudit émetteur (100, 101) est ou sont utilisées dans ladite étape de dérivation de ladite estimation de ladite distance future (d_100, d_101) entre ledit récepteur (10) et ledit émetteur (100, 101).

11. Dispositif d'avertissement de collision (1) utilisé dans l'aviation, comprenant
- au moins un récepteur (10) à une première position (P_10) avec au moins une antenne de réception (10a) pour recevoir au moins un signal radio (S_100) qui est transmis par au moins un émetteur (100) à une deuxième position (P_100), dans laquelle ladite première position (P_10) et ladite deuxième position (P_100) sont séparées par une distance variable (d_100),
- un dispositif de localisation (11), à savoir un récepteur GNSS (11), pour mesurer ladite première position (P_10) dudit récepteur (10) et dériver les premières informations de position (L_10) indicatives de ladite première position (P_10),
- une unité de sortie (12) pour émettre un avertissement, en particulier un avertissement de collision, à l'intention d'un opérateur,
**caractérisé en ce que**
- une unité de commande (13) du dispositif d'avertissement de collision (1) est adaptée pour exécuter les étapes d'un procédé selon l'une des revendications 1 à 6 pour calculer au moins une fonction de correction (C) et pour exécuter les étapes d'un procédé selon l'une des revendications 7 à 10 pour calculer au moins une deuxième estimation de ladite distance (d_100).

12. Le dispositif d'avertissement de collision (1) de la revendication 11 comprenant en outre une interface permettant de connecter ledit dispositif d'avertissement de collision (1) à un système de commande de vol afin de recevoir des données de vol, en particulier une vitesse actuelle et/ou une accélération actuelle et/ou un relèvement actuel et/ou une position actuelle du gouvernail, de la part dudit système de commande de vol.
